# EUROPEAN PATENT APPLICATION

(11) **EP 2 800 170 A1**
(43) Date of publication of application: **05.11.2014**
(21) Application number: 12862328.7
(22) Date of filing: 27.12.2012
(51) Int. Cl.: H01M 4/02, H01M 4/38, H01M 4/62, H01M 4/04

(54) **FILM-TYPE NEGATIVE ELECTRODE FILLED WITH ACTIVE MATERIAL AND METHOD FOR MANUFACTURING SAME**

(30) Priority: 30.12.2011 KR 20110147353
(71) Applicant: Samsung Fine Chemicals Co., Ltd., Ulsan 680-090 (KR)
(72) Inventor: LEE, Ju Myeung, Cheongju-si Chungcheongbuk-do 361-300 (KR); YANG, Woo Young, Daejeon 302-747 (KR); KAWAKAMI, Soichiro, Daejeon 103-605 (KR); CHANG, Dong Gyu, Daejeon 301-131 (KR); JUNG, Hyun Ju, Seoul 153-010 (KR)
(74) Representative: Kador & Partner
(86) International application number: PCT/KR2012/011618
(87) International publication number: WO 2013/100652

(57) **Abstract**

There are provided a film-type negative electrode filled with an active material and a method of manufacturing the same. The negative electrode according to the present invention includes a porous base film and a negative active material nanoparticle filled in pores of the porous base film. According to the present invention, an excessive change in volume of a negative active material can be minimized during charging and discharging so as to improve a lifespan characteristic.

## Description

### CROSS-REFERENCE TO RELATED APPLICATION

This application claims priority to and the benefit of Korean Patent Application No. 2011-0147353, filed on December 30, 2011, the disclosure of which is incorporated herein by reference in its entirety.

### BACKGROUND

### 1. Field of the Invention

The present invention relates to a film-type negative electrode filled with an active material and a method of manufacturing the same, and more particularly, to a film-type negative electrode filled with an active material capable of minimizing an excessive change in volume of the negative active material during charging and discharging so as to improve a lifespan characteristic, and a method of manufacturing the same.

### 2. Discussion of Related Art

A lithium secondary battery has been frequently used in small portable devices such as mobile phones and laptop computers, but recently, it is expected that its availability will be increased even in large devices, such as electric vehicles, or electric storage devices of wind power and solar power, and as a result, researches have been actively conducted.

Particularly, in an usage of the electric vehicles or the electric storage devices, not only a driving distance and an use time should be long but also the needs of durability of the battery is very high, and as a result, it is difficult to develop a secondary battery having a high capacity and a high lifespan using an existing product.

As a negative electrode material of the secondary battery, a lithium metal and a carbon-based material are frequently used. However, in the case where the lithium metal is used as the negative electrode material, when charging and discharging are repeated, a possibility that a dendrite crystal is generated on an electrode surface is very high, and as a result, a short is generated and thus stability is low. In addition, in case of the carbon-based material, there are problems in that due to high irreversibility, initial discharging efficiency is low and the capacity is reduced, and during overcharging, lithium is extracted on the carbon surface, and thus there is a high possibility of causing a stability problem.

Recently, as a material compensating for the problems, researches on an alloy-based negative active material have been actively conducted.

Particularly, an Si-based active material has a theoretical capacity of about 4,400 mAh/g, which is ten times or higher than an existing graphite-based active material. However, since excessive volume expansion and contraction during charging and discharging are caused (expansion of 400% to initial volume), there is a problem in that it is vulnerable in terms of a lifespan characteristic and stability.

Accordingly, a method of improving the lifespan characteristic by minimizing a change in volume while the alloy-based negative active material has a high capacity has been researched.

As a result, while the present inventors researched a method of minimizing a rate of change in volume for the alloy-based negative active material, the present inventors completed the present invention by finding out that when a negative active material manufactured by a nanoparticle is filled in pores of a porous film having predetermined mechanical strength to be used as a negative electrode, a rate of change in volume of the active material during charging and discharging may be minimized to improve a lifespan characteristic.

### SUMMARY OF THE INVENTION

The present invention has been made in an effort to provide a film-type negative electrode filled with an active material having advantages of minimizing a rate of change in volume of a negative active material during charging and discharging to improve a lifespan characteristic.

Further, the present invention has been made in an effort to provide a method of manufacturing a film-type negative electrode filled with an active material having advantages of minimizing a rate of change in volume of a negative active material during charging and discharging to improve a lifespan characteristic.

According to an aspect of the present invention, there is provided a negative electrode comprising a porous base film; and a negative active material nanoparticle filled in pores of the porous base film.

Further, a binder and/or a conductive additive may be further filled in the pores of the porous base film.

The pores of the porous base film may preferably have diameters of 0.01 to 10 µm.

Preferably, the negative active material may be an alloy-based negative active material, the binder may be one kind or more selected from the group consisting of polyvinylidene fluoride (PVDF) and polyimide (PI), and the conductive additive may preferably be one kind or more selected from the group consisting of graphene, graphene analogues, graphite, and carbon fiber.

According to another aspect of the present invention, there is provided a method of manufacturing a negative electrode, comprsing: preparing a porous base film; manufacturing an active material slurry by dispersing a negative active material nanoparticle in an organic solvent; and filling the active material slurry dispersed in the organic solvent in pores of the porous base film.

A binder and/or a conductive additive may be further included in the active material slurry.

In order to uniformly fill the active material slurry in the pores of the porous base film by evaporating the organic solvent, the method may further include heat-treating at 50 to 150°C.

According to the present invention, the negative electrode filled with the negative active material in pores of the porous base film has the following advantageous effects.

First, existing problems of deterioration of electric conductivity due to a high rate of change in volume during charging and discharging and rapid deterioration of a lifespan due to continuous electrolyte consumption may be effectively solved by minimizing a change in volume of the active material during charging and discharging.

Second, the rate of change in volume of the active material may be suppressed to minimum by controlling a filling ratio of the active material in the porous base film, thereby maintaining the conductivity of active materials and minimizing decomposition of the electrolyte. The entire lifespan characteristics may be improved by maintaining the characteristics of the active material and by reducing electrolyte consumption.

Third, the negative electrode filled in the pores of the porous film base material may be effectively applied to mass production due to a film shape.

### BRIEF DESCRIPTION OF THE DRAWINGS

The above and other objects, features, and advantages of the present invention will become more apparent to those of ordinary skill in the art by describing in detail exemplary embodiments thereof with reference to the accompanying drawings, in which:
FIG. 1 is a perspective view illustrating a porous base film to be filled with an active material according to an exemplary embodiment of the present invention;
FIG. 2 is a perspective view illustrating a porous base film filled with an active material according to an exemplary embodiment of the present invention;
FIG. 3 is a graph illustrating the performance of battery having a negative electrode manufactured according to Example 1 of the present invention;
FIG. 4 is a graph illustrating the performance battery having a negative electrode manufactured according to Comparative Example of the present invention;
FIGS. 5 and 6 are SEM images of a surface and a cross section of a porous base film, respectively, not filled with an active material according to the present invention;
FIGS. 7 and 8 are SEM images of a surface and a cross section of a porous base film, respectively, filled with an active material according to the present invention.

### DETAILED DESCRIPTION OF EXEMPLARY EMBODIMENTS

Exemplary embodiments of the present invention will be described in detail below with reference to the accompanying drawings. While the present invention is illustrated and described in connection with exemplary embodiments thereof, it will be apparent to those skilled in the art that various modifications can be made without departing from the spirit and scope of the invention.

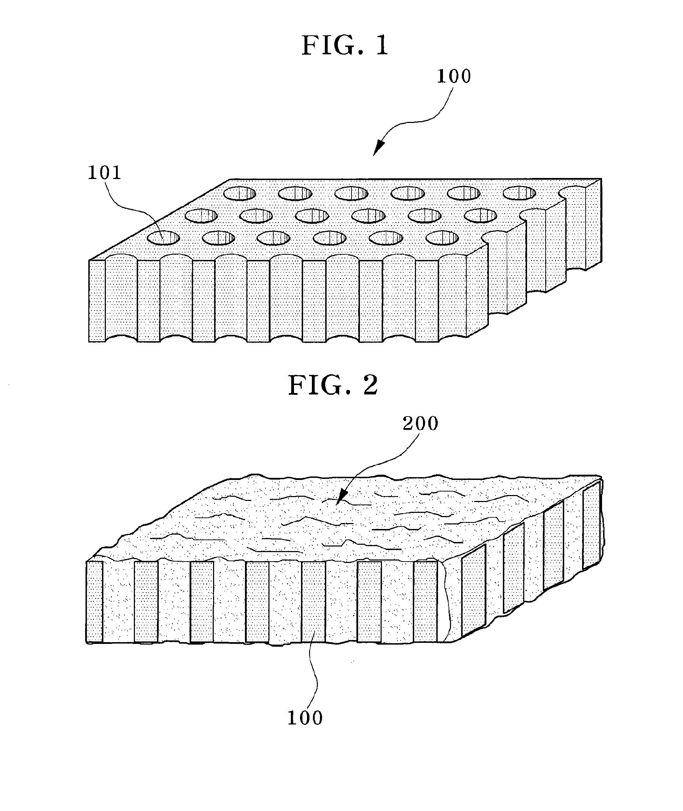

FIG. 1 is a perspective view illustrating a porous base film to be filled with an active material according to an exemplary embodiment of the present invention, and FIG. 2 is a perspective view illustrating a porous base film filled with an active material according to an exemplary embodiment of the present invention.

Referring to FIGS. 1 and 2, an exemplary embodiment of the present invention is a film-type negative electrode filled with an active material, comprsing: a porous base film 100; and a negative active material nanoparticle filling material 200 filled in pores 101 of the porous base film.

Preferably, mechanical strength of the porous base film 100 may have mechanical strength enough to minimize a change in volume during charging and discharging, and in detail, may preferably have strength in a range of 100 to 1,000 MPa.

The pores 101 of the porous base film 100 has preferably a diameter of 0.01 to 10 µm, and more preferably a diameter of 50 to 500 nm, as a fillable size of the negative active material nanoparticle. A separation film for secondary battery may be used as the porous base film.

As the porous base film 100, an existing separation film for a secondary battery (for example, cross-linked polyethylene (PE)) may be used as it is. The porous base film 100 may be prepared by using an existing method of manufacturing a separation film such as a stretching method. As a material of the porous base film, a polyethylene (PE)-based material, a polyimide (PI)-based material, or a mixture thereof (for example, a polyimide-based composite binder containing an epoxy resin), or a cellulose-based materials may be used.

As the negative active material which is the filling material 200, a general negative active material in the art may be used, and particularly, an alloy-based negative active material such as an Si-based active material, which has several times or larger volume than an existing graphite-based active material, but has an excessive rate of change in volume during charging and discharging, may be used.

In addition, the negative active material includes Pb, Sn, Al, Ge, or Ag.

In this case, the negative active material may be a nano-sized particle, and may preferably have a particle size of 100 nm or less.

The negative active material nanoparticle may be provided as a commercial nanoparticle or a nanoparticle through mechanical grinding.

A binder which is generally used in the art, for example, PVDF or PI, may be included in the filling material 200. Particularly, it is preferred that a radius of gyration is 1 µm or less.

The binder may be included in a range of 1 to 30 parts by weight with respect to the weight of the negative active material nanoparticle.

A conductive additive in addition to the binder may be included in the filling material filled in the pores of the porous base film, and as the conductive additive, a carbon-based conductive additive may be used, and in detail, graphene, graphene analogues, graphite, or carbon fiber may be used.

The conductive additive may be included in a range of 1 to 50 parts by weight with respect to the weight of the negative active material nanoparticle.

According to another exemplary embodiment of the present invention, the present invention provides a method of manufacturing a film-type negative electrode filled with an active material, comprising: preparing a porous base film; manufacturing an active material slurry by dispersing a negative active material nanoparticle in an organic solvent; and filling the active material slurry dispersed in the organic solvent in pores of the porous base film.

In the preparing of the porous base film, preferably the porous base film may have mechanical strength enough to minimize a change in volume during charging and discharging, specifically, in a range of 100 to 1,000 MPa.

The pores of the porous base film has preferably a diameter of 0.01 to 10 µm, and more preferably a diameter of 50 to 500 nm, as a fillable size of the negative active material nanoparticle. A separation film for secondary battery may be used as the porous base film.

In the filling of a filling material of a negative active material nanoparticle in the pores of the porous base film, a general negative active material in the art may be used as the negative active material, and particularly, an alloy-based negative active material such as an Si-based active material, which has several times or larger capacity than an existing graphite-based active material but has an excessive rate of change in volume during charging and discharging, may be used.

In this case, the negative active material may be a nano-sized particle, and may have a particle size of 100 nm or less.

The negative active material nanoparticle may be provided as a commercial nanoparticle or a nanoparticle through mechanical grinding.

A binder, which is generally used in the art, for example, PVDF or PI, may be further filled in the pores of the porous base film.

The binder may be included in a range of 1 to 30 parts by weight with respect to a weight of the negative active material nanoparticle.

A conductive additive in addition to the binder may be filled in the pores of the porous base film, and as the conductive additive, a carbon-based conductive additive, for example, graphite, may be used.

The conductive additive may be included in a ragne of 1 to 50 parts by weight with respect to the weight of the negative active material nanoparticle.

Further, in the filling, the negative active material nanoparticle, the binder, or the conductive additive is dispersed in the organic solvent to manufacture the active material slurry, and the active material slurry is filled into the pores of the porous base film.

As the organic solvent, N-methyl-2-pyrrolidone (NMP), acetone, isopropyl alcohol (IPA), diethyl ether, cyclohexane, toluene, dimethylformamide (DMF), dimethyl sulfoxide (DMSO), tetrahydrofuran (THF), or the like may be used.

Next, uniformly filling the active material slurry by evaporating the organic solvent may be further performed, and here, the organic solvent may be evaporated through heat treatment at a temperature of 50 to 150°C, and preferably 80 to 130°C. The active material slurry may be uniformly filled by controlling the evaporation velocity.

Hereinafter, desired exemplary embodiments of the present invention will be described in more detail. However, exemplary embodiments introduced herein are provided to let those skilled in the art sufficiently understand the present invention, and may be modified in various different ways, and the scope of the present invention is not limited to exemplary embodiments described below.

### Example 1

A binder (PVDF) and a conductive additive (Sigma-Aldrich GMC (graphitized mesoporous carbons, 699627, <35nm)) were mixed in a commercial Si nanoparticle (Sigma-Aldrich Si nanopowder (633097, <100nm)) with a weight ratio of 8:1:1 (Si nanoparticle : binder : conductive additive), and then the mixture was dispersed in an organic solvent (NMP) of 10 ml to manufacture an active material slurry. Subsequently, the active material slurry was coated on a porous film (CLPE, 100nm, 300MPa) positioned on a current collector with a coated thickness of 25 µm, and then the organic solvent was evaporated on a hot-plate heated at 110°C for 5 hours to manufacture a porous film-type negative electrode filled with the active material slurry (filling ratio of active material: 36%).

### Example 2

A Si nanoparticle having an average particle size of 50 nm which is prepared through mechanical grinding, a binder (PVDF), and a conductive additive (Sigma-Aldrich GMC (graphitized mesoporous carbons, 699627, <35nm)) were mixed with a weight ratio of 6.5:2.5:1 (Si nanoparticle : binder : conductive additive), and then the mixture was dispersed in an organic solvent (NMP) of 10 ml to manufacture an active material slurry. Subsequently, the active material slurry was coated on a porous film (CLPE, 100nm, 300MPa) positioned on a current collector with a coated thickness of about 25 µm, and then the organic solvent was evaporated on a hot-plate heated at 110°C for 5 hours to manufacture a porous film-type negative electrode filled with the active material slurry (filling ratio of active material: 29.25%).

### Comparative Example 1

The same Si nanoparticle, the binder, and the conductive additive to those of Example 1 were dispersed in an organic solvent to manufacture an active material slurry and manufactured a reference negative electrode, except that the slurry was not filled into the porous film. That is, a weight ratio of the Si nanoparticle, the binder, and the conductive additive was 8:1:1 and the slurry was prepared with a paste mixer using an organic solvent (NMP) of 20 ml. Subsequently, the slurry was coated on a current collector so that a slurry coating amount after coating becomes 3.5 to 4mg/cm² (based on a dry weight), and then dried for 15 minutes in a convection heater at 110°C to manufacture the reference negative electrode.

### Evaluative Example 1

A 2032 type half coin cell was manufactured by using the negative electrode manufactured by Example 1 and Comparative Example to evaluate charging and discharging characteristics and a lifespan characteristic.

That is, the 2032 type half coin cell, having the reference negative electrode manufactured by Example 1 or Comparative Example, a counter electrode(Li metal) and an electrolyte (1.5M LiPF₆, EC:DEC=1:3) was manufactured by press molding.

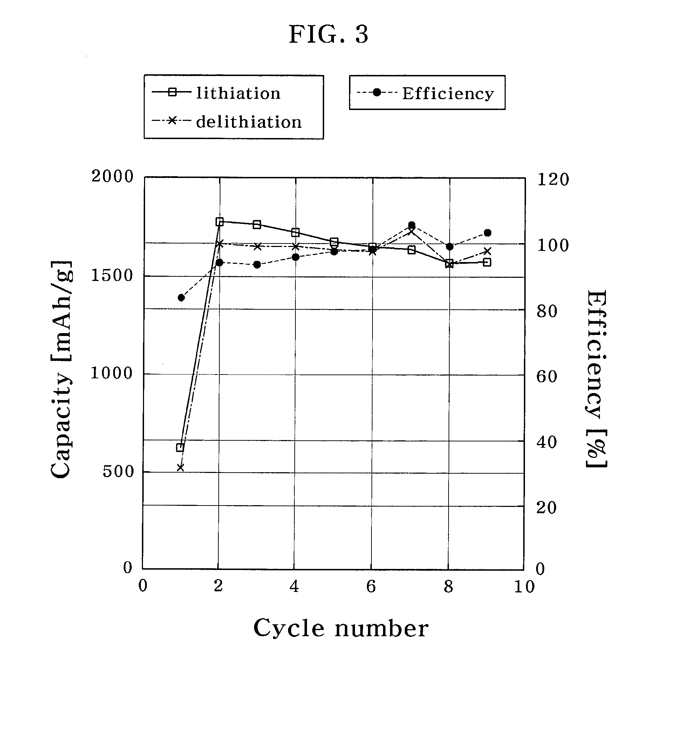

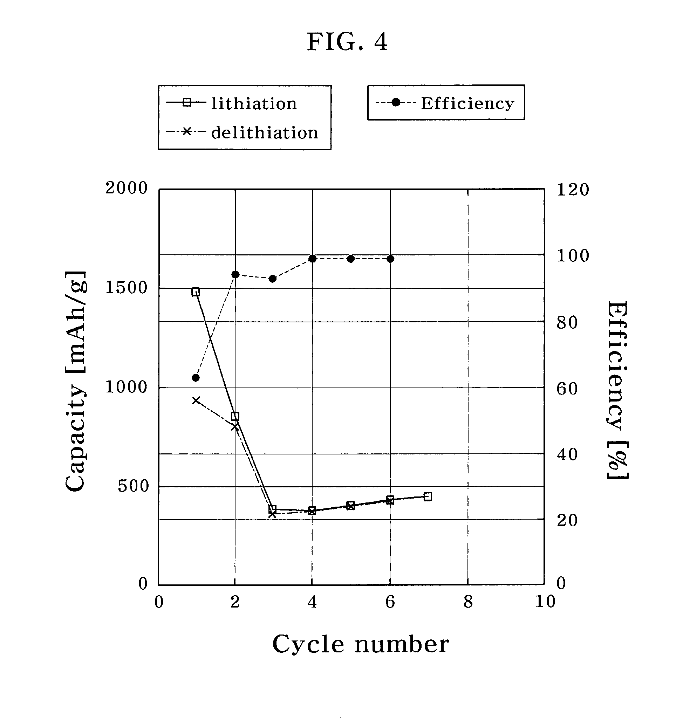

The charging and discharging characteristics and the lifespan characteristic were evaluated by operating 0.05C charging/discharging once (formation), 0.1C charging/discharging once, and 0.5C charging/discharging fifty times (cycling). An evaluation result of a battery using the negative electrode of Example 1 was illustrated in FIG. 3, and an evaluation result of a battery using the negative electrode of Comparative Example was illustrated in FIG. 4.

It was confirmed that the charging and discharging characteristics and the lifespan characteristic of the battery using the negative electrode of Example 1 of the present invention were excellent.

### Evaluative Example 2

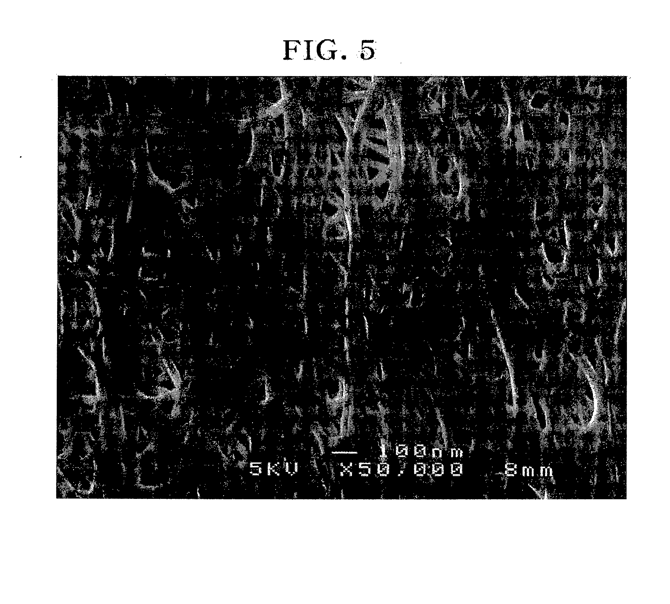

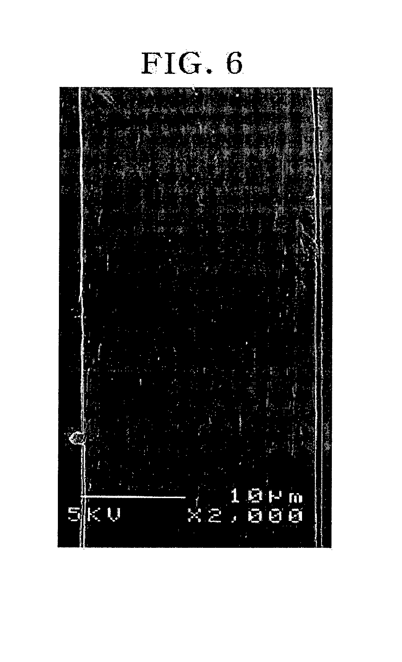

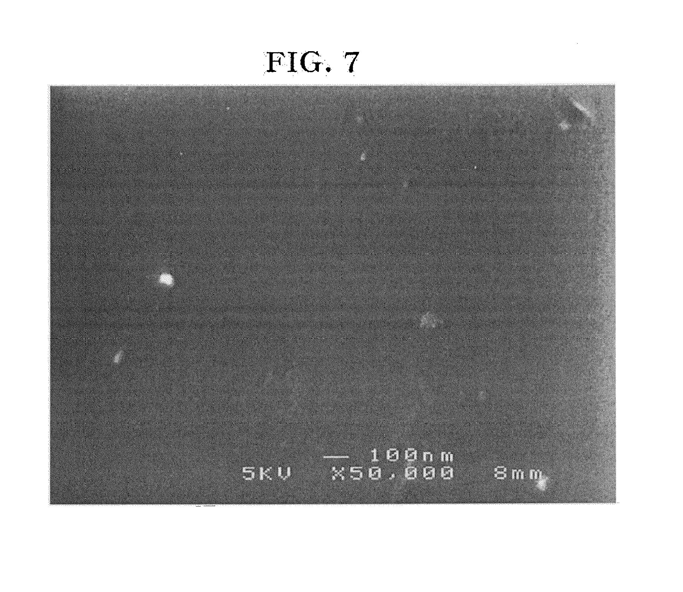

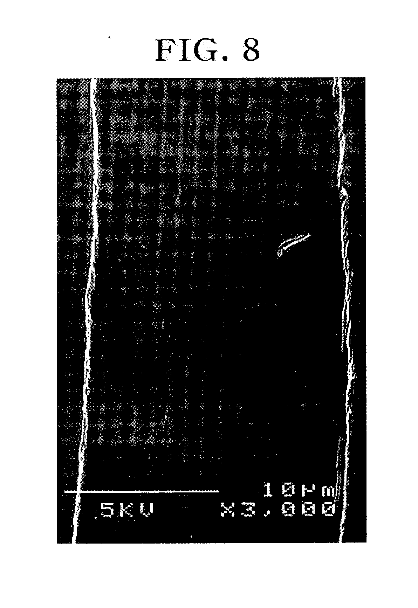

A surface and a cross section of the porous film used in the negative electrode manufactured in Example 1 were observed using an SEM before and after filling the active material, and the results were illustrated in FIGS. 5, 6, 7 and 8, respectively.

## Claims

1. A negative electrode, comprising:
a porous base film; and
a negative active material nanoparticle filled in pores of the porous base film.

2. The negative electrode of claim 1, further comprising a binder and/or a conductive additive filled in the pores of the porous base film.

3. The negative electrode of claim 1, wherein the pores of the porous base film have diameters of 0.01 to 10 µm.

4. The negative electrode of claim 1, wherein the negative active material is an alloy-based negative active material.

5. The negative electrode of claim 2, wherein the binder includes one kind or more selected from the group consisting of polyvinylidene fluoride (PVDF) and polyimide (PI).

6. The negative electrode of claim 2, wherein the conductive additive includes one kind or more selected from the group consisting of graphene, graphene analogues, graphite, and carbon fiber.

7. A method of manufacturing a negative electrode, comprising:
preparing a porous base film;
manufacturing an active material slurry by dispersing a negative active material nanoparticles in an organic solvent; and
filling the active material slurry dispersed in the organic solvent in pores of the porous base film.

8. The method of manufacturing a negative electrode of claim 7, wherein the active material slurry further includes a binder and/or a conductive additive.
